# EUROPEAN PATENT APPLICATION

(11) **EP 0 552 570 A2**
(43) Date of publication of application: **28.07.1993**
(21) Application number: 92311836.8
(22) Date of filing: 29.12.1992
(51) Int. Cl.: B60N 2/28

(54) **Child seat to automative seat integration**

(30) Priority: 22.01.1992 US 823992
(71) Applicant: INDIANA MILLS & MANUFACTURING, INC., Westfield Indiana 46074-0408 (US)
(72) Inventor: Anthony, James R., Carmel, Indiana 46032 (US)
(74) Representative: Denmark, James

(57) **Abstract**

A child seat to automotive seat integration comprising a vehicle seat (10) which includes a vehicle seat frame, a child seat (20) which includes a child seat frame (26), and first and second locking devices (11-13, 21-23) which permit the child seat (20) to be releasably locked to the vehicle seat frame. The child seat (20) is positionable atop the vehicle seat (10). A first locking device (11-13) is mounted to the vehicle seat frame and a second locking device (21-23) is mounted on the child seat frame (26). The first locking device (11-13) and the second locking device (21-23) are operable to be interlocked together and secure the child seat frame (26) to the vehicle seat frame. When the first and second locking devices are in an unlocked condition, the child seat (20) is released from the vehicle seat frame, thus allowing removal of the child seat (20) off the vehicle seat (10) and from the vehicle.

## Description

### BACKGROUND OF THE INVENTION

Often when small children ride in an automobile, they are placed in a child safety seat which is placed upon the seat of the automobile. The child safety seat normally includes a set of seat belts which secure tile child to the safety seat. The child safety seat is in turn normally secured to the automobile in some fashion utilizing the seat belts which are permanently attached inside the vehicle. However, the standard seat belts for an automobile are designed to secure an adult to the seat of the automobile rather than designed to secure a child safety seat to the automobile. Consequently, the child safety seat must be designed to accommodate being secured to the automobile with any of the several different types of restraining means available in different automobiles. These include but are not limited to lap belts, shoulder belts, combined lap and shoulder belts and the like. What is needed is a child seat to automobile seat integration means which is permanently connected to the automobile, like the standard adult safety belts, but which is designed specifically for securing a child safety seat to the automobile. Such a child safety seat attachment means would preferably have the ability to be concealed within the seat of the automobile when not in use.

### SUMMARY OF THE INVENTION

A child restraint system comprising a vehicle seat having a vehicle seat frame, and a child safety seat positionable atop the vehicle seat having a child seat frame. A first locking device is interconnected to the vehicle by being mounted on the vehicle seat frame. A second locking device is mounted on the frame of the child seat. The first locking device and the second locking device are operable when in a locked condition to interlock together thus securing the child seat frame to the vehicle via the vehicle seat frame. The first and second locking device are also releasable to an unlocked condition such that the child seat frame is released from the vehicle, thus allowing the removal of the child seat off of the vehicle seat and from the vehicle.

One object of the present invention is to provide an improved child seat to automotive seat integration.

Related objects and advantages of the present invention will be apparent from the following description.

### BRIEF DESCRIPTION OF THE DRAWINGS

FIG. 1 is a partial isometric view of an automobile seat of a vehicle which incorporates a locking means according to the present invention.
FIG. 2 is the same view as FIG. 1 only having a child seat locked thereto according to the preferred embodiment of the present invention.
FIG. 3 is a close-up view of the automobile seat of FIG. 2 showing the concealing means for concealing the locking means according to one aspect of the present invention.
FIG. 4 is the same view as FIG. 3 only showing the locking means according to the present invention when the concealing means shown in FIG. 3 is cut away.
FIG. 5 is the same view as FIG. 3 only showing a hand reaching behind the concealing means shown in FIG. 3 to expose the locking means shown in FIG. 4.
FIG. 6 is the same view as FIG. 3 only showing the locking means of FIG. 4 as it is being removed from the concealing means shown in FIG. 3.
FIG. 7 is the same view as FIG. 3 only showing the locking means according to one aspect of the present invention after it has been fully withdrawn from the concealing means shown in FIG. 3.
FIG. 8 is a front elevational view showing how the locking means according to one aspect of the present invention is attached to the vehicle frame behind the vehicle seat.
FIG. 9 is an isometric view of a child safety seat incorporating the locking means of the present invention and several other features of the present invention.

### DESCRIPTION OF THE PREFERRED EMBODIMENT

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

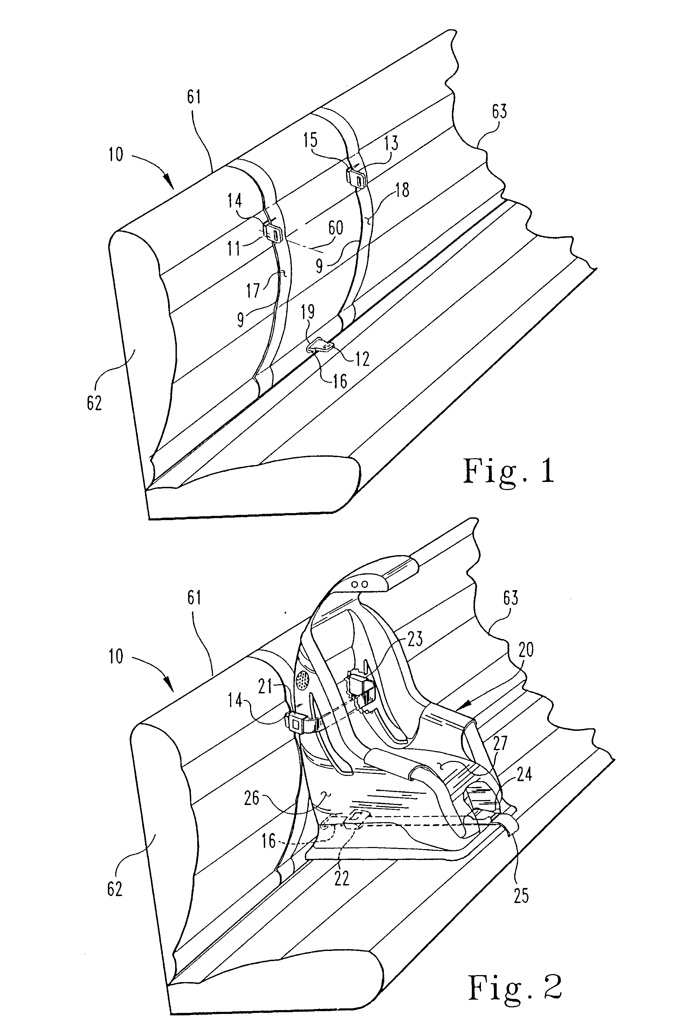

Referring now to FIG. 1, there is shown a standard automobile seat 10 having a back cushion, a seat cushion and incorporating locking means for securing a child safety seat to the automobile according to the preferred embodiment of the present invention. Locking means 11, 12 and 13 are attached to the vehicle via the vehicle seat frame (not shown) upon which vehicle seat 10 is mounted. Locking means 11, 12 and 13 are preferably standard seat belt buckle tongues which are well known in the art, but could also be the buckle portion of a standard seat belt buckle, or any other comparable coupling means which may be releasably interlocked to another coupling means. Each of the locking means 11, 12 and 13 includes a base portion 14, 15 or 16, respectively. The base portions 14, 15 and 16 are all securely connected in some fashion to the vehicle seat frame upon which the vehicle seat 10 is mounted. Tongue 12 protrudes outwardly from the outer surface of the vehicle seat through a slit 19 in vehicle seat 10. Tongues 11 and 13 also protrude outwardly from the vehicle seat through vertical slots 9, but are capable of being pivoted into a concealed position behind concealing means 17 and 18, respectively. The tongues are rigid as contrasted to the conventional belt method of securing the child seat to the vehicle seats.

FIG. 2 shows a child safety seat 20 after it has been placed upon vehicle seat 10 and secured to the locking means shown in FIG. 1. Child safety seat 20 includes locking means 21, 22 and 23 which are attached to and extend perpendicularly rearwardly from the child seat 20 such that they may be readily interlocked to the locking means 11, 12 and 13 shown in FIG. 1. Locking means 21, 22 and 23 are preferably standard seat belt buckles which correspond to the tongues 11, 12 and 13. It being understood that what is important to the invention is that one-half of a releasable locking means be secured to the vehicle adjacent the vehicle seat and that the other half of the locking means be secured to the frame 26 of the child seat 20. Child seat 20 includes a seat portion 27 upon which a child is set and also includes a conventional independent restraining means or harness (not shown) which permits the child to be secured to the child seat.

The buckles and tongues of the two locking means are arranged in pairs with each pair positioned on a separate axis. For example, tongue 11 extends outwardly along axis 60 from seat 10 with buckle 21 along axis 60 enabling child seat 20 to be moved along axis 60 thereby locking tongue 11 and buckle 21 together.

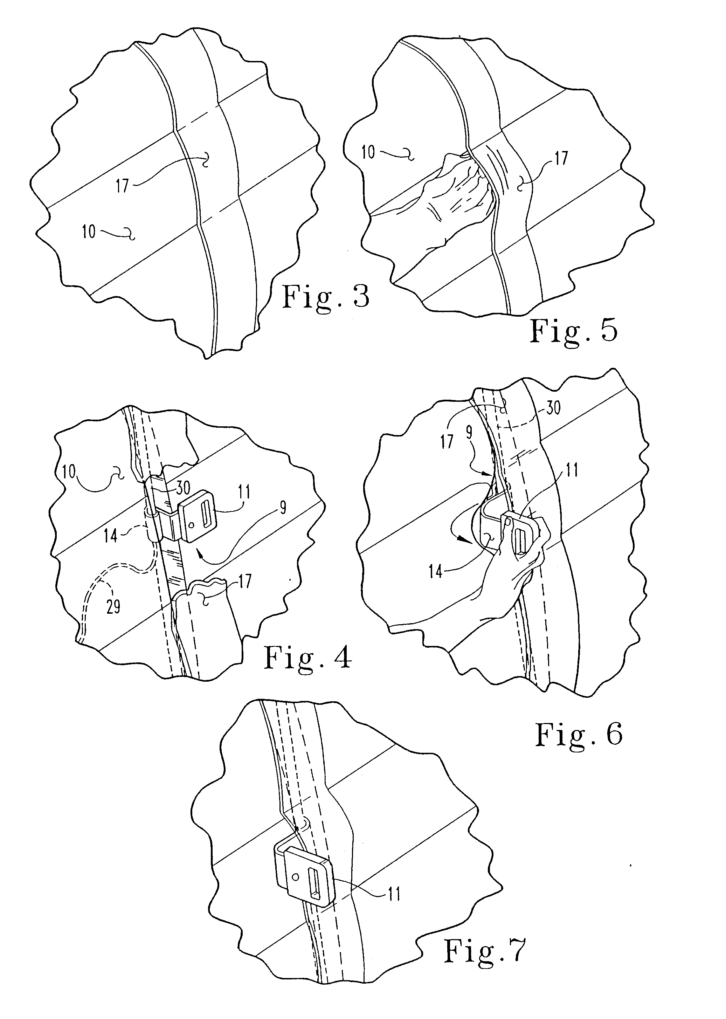

Preferably, vehicle seat 10 includes a stretch foam fabric band behind which the locking means may be concealed when not in use. Fabric band 17 could also include a Velcro strip on its inner side to inhibit lateral movement of the fabric band relative to the locking means. FIG. 4 shows locking means 11 when a portion of fabric band 17 has been cut away. FIG. 4 also shows other aspects of the present invention. For instance, base 14 of locking means 11 is mounted on rod 30, which acts as a rail whose action is better illustrated in FIG. 8. In this embodiment, a separate rod is mounted parallel to and within each slot 9 of FIG. 1. Both ends of each rod 30 are attached to the automobile seat frame, which is not shown, so that locking means 11 can be readily moved up and down along rod 30 to a suitable position. In another aspect of the present invention shown in FIG. 4, locking means 11 could be connected to a locking indicator via electronic link 29. In this way, an indicator means could be provided which could indicate to the parent whether locking means 11 had been properly secured to its counterpart locking means on the child seat. FIGS. 5, 6 and 7 show the parent inserting his or her hand behind fabric band 17 to expose the locking means so that locking means 11 protrudes away from the surface of vehicle seat 10 and is ready to be connected to a child safety seat. Slot 9 is located between the bottom cushion of seat 10 and the top 60 of the back cushion of seat 10 and also between the opposite side ends 62 and 63 of the back cushion.

Referring now to FIG. 8, there is shown the preferred method of attaching the locking means 11 and 12 shown in FIG. 1 to the vehicle via vehicle seat frame 32, upon which vehicle seat 10 of FIG. 1 is mounted. Base portion 14 of locking means 11 includes a substantially cylindrical cavity through which rod 30 is received. Both ends of rod 30 are rigidly secured to vehicle seat frame 32. The tongue portion of locking means 11 is attached to base portion via a pivot pin 31, which gives locking means 11 a first degree of freedom to pivot with respect to base portion 14. Likewise, base portion 14 has the ability to pivot about an axis defined by rod 30 and also has the ability to move up and down along the rod 30, thus giving locking means 11 two more degrees of freedom. The three degrees of freedom shown in FIG. 8 allow locking means 11 to be adjusted to a proper orientation in order to correspond to the size, shape and locking means arrangement of a particular child seat to which it is going to be attached.

Referring back to FIGS. 1-7, child seat 20 is secured to the vehicle in the following manner. First, the parent or other individual reaches behind the concealing means of vehicle seat 10 to expose the locking means as shown in FIGS. 3-7. Next, the child seat 20 is placed on vehicle seat 10 so that the various locking means are near one another. The vertical locking means 11 and 13 are then moved on their respective mounting rods so that their respective tongues are directly adjacent locking means 21 and 23 on child seat 20. The parent then locks locking means 11 to locking means 21, and locking means 13 to locking means 23 by moving child seat 20 with its locking means toward vehicle seat 10 along each of the separate axes defined by each of the respective locking means. Following this, locking means 12 is secured to locking means 22. The child seat 20 is then pulled snug against vehicle seat 10 by pulling on belt, or web, 25 which is connected to locking means 22. The child is then placed in the child seat and secured in place using the child seat's own independent restraining means which is not shown.

Belt 25 preferably travels through the base of child seat 20 and protrudes through an adjuster 24 mounted to the front of the child seat. Adjuster 24 is one of many types of adjusters known in the art which have the ability to releasably grip belt 25. The child seat is pulled snug against vehicle seat 10 when the parent grips belt 25, releases adjuster 24, pulls belt 25 away from adjuster 24 such that the base of the vehicle seat is pulled toward vehicle seat 10, and then releases adjuster 24 such that it again grips belt 25. Adjuster 24 could be of the type shown in FIGS. 10-12 of U.S. Patent No. 4,679,852 to Anthony et al., which figures and the accompanying description are incorporated herein by reference.

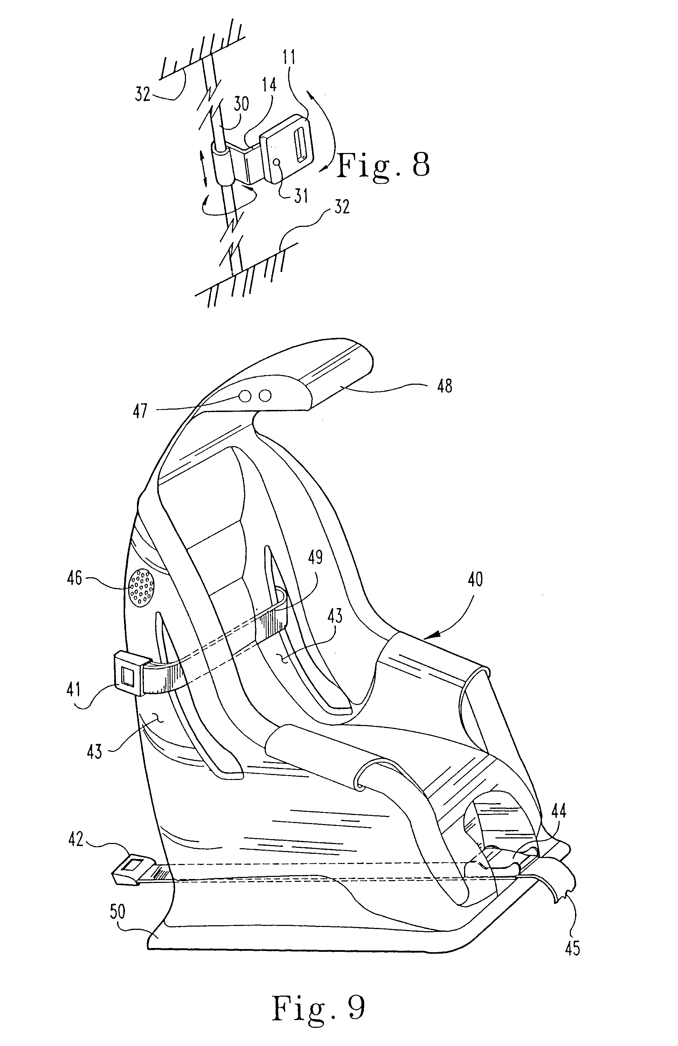

Referring now to FIG. 9, there is shown an alternative child seat 40 which incorporates several other aspects of the present invention. Like the embodiment shown earlier, child seat 40 includes three locking means, of which only locking means 41 and 42 can be seen. Locking means 41 and the hidden locking means are both attached to frame 43 of the child seat 40, and are interconnected to one another via belt 49.

Like the child seat shown earlier, child seat 40 includes locking means 42 which is connected via belt 45 to adjuster 44, to enable child seat 40 to be pulled snug against the automobile seat. Furthermore, child seat 40 can be pivotally mounted on its base frame 50 as is conventionally known in the art. In addition to the features already described, child seat 40 could include an overhead light 48 which can be turned on and off via switch 47. Also included is an accident alarm 46 which would automatically sound in case of an accident situation to alert rescue crews of a possible child in the vehicle. The various locking means of the child seat 40 could also include built-in side connectors and tether straps which could be interchangeably manufactured to Europe and U.S. specifications to allow quick removal of the child seat for convenience and/or in the case of an accident.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

## Claims

1. A child restraint system comprising:
a vehicle seat including a vehicle seat frame;
a child seat positionable atop said vehicle seat with said child seat including a child seat frame;
first locking means mounted on said vehicle seat frame with said first locking means being rigid; and,
second locking means mounted on said child seat frame, said first locking means and said second locking means operable when in a locked condition to interlock together securing said child seat frame to said vehicle seat frame and when in an unlocked condition releasing said child seat frame from said vehicle seat frame allowing removal of said child seat off said vehicle seat.

2. The child restraint system of claim 1 and further comprising:
concealing means on said vehicle seat operable to conceal said first locking means when in said unlocked condition but further operable to reveal said first locking means so said first locking means can interlock with said second locking means.

3. The child restraint system of claim 1 wherein:
said child seat frame includes an upper back portion to support the back of a child and a lower seat portion to support the bottom of a child;
said second locking means includes second upper locking means located on said upper back portion and second lower locking means located on said lower seat portion beneath said second upper locking means; and
said first locking means includes first upper locking means releasably engageable with said second upper locking means and further includes first lower locking means releasably engageable with said second lower locking means.

4. The child restraint system of claim 3 and further comprising:
adjustment means mounted to said child seat forward of said upper back portion including a web and an adjuster with said web attached to said second lower locking means and extending forwardly to said adjuster, said adjustment means operable to allow positioning of said second lower locking means relative to said first lower locking means by movement of said web relative to said adjuster to snug said child seat up to said vehicle seat.

5. The child restraint system of claim 3 wherein:
said first upper locking means is movable vertically to align with said second upper locking means.

6. The child restraint system of claim 5 wherein:
said first upper locking means and said first lower locking means are belt buckle tongues and said second upper locking means and said second lower locking means are belt buckles to receive said tongues.

7. A child seat arid vehicle seat integrated system comprising:
a child seat;
a vehicle seat;
first locking means mounted to said child seat; and,
second locking means mounted to said vehicle seat, said first locking means and said second locking means releasably interlockable together to secure said child seat and vehicle seat together but releasable to allow separation thereof, said first locking means and said second locking means includes a plurality of buckles and tongues arranged each in a buckle and tongue pair with each pair positioned on a separate axis extending outwardly and between said child seat and said vehicle seat.
